Europäisches Patentamt

European Patent Office

Office européen des brevets

(11) Publication number: **0 315 801**
**A2**

# EUROPEAN PATENT APPLICATION

(21) Application number: 88117331.4

(22) Date of filing: 18.10.88

(51) Int. Cl.⁴: **B22D 17/12 , B29C 33/34 , B29C 45/04**

(30) Priority: 11.11.87 JP 283122/87
10.11.87 JP 170658/87 U

(43) Date of publication of application:
17.05.89 Bulletin 89/20

(84) Designated Contracting States:
DE FR GB IT

(71) Applicant: UBE INDUSTRIES, LTD.
12-32, Nishihonmachi 1-chome
Ube-shi, Yamaguchi-ken 755(JP)

(72) Inventor: Uchida, Masashi c/o Ube Machinery
Works
of Ube Industries Ltd., 1980 Aza Okinoyama
Oaza Kogushi Ube-shi Yamaguchi(JP)

(74) Representative: von Samson-Himmelstjerna,
Friedrich R. Dipl.-Phys. et al
Samson & Bülow Widenmayerstrasse 5/I
D-8000 München 22(DE)

(54) Die casting apparatus.

(57) In a die casting apparatus, mold opening/closing units are mounted on carriers and the carriers are freely moved in/out from a mold clamping unit in a lateral direction. The mold clamping unit includes at least two guides for guiding each of the carriers from a standby position to a predetermined position in the mold clamping unit and a stationary board having a higher portion formed at a portion sandwiched by the guides. Each of the carriers includes a lift unit for moving upward/downward the mold opening/closing unit. When each of the carriers is to be moved, the lift unit positions the mold opening/closing unit at a height at which the mold opening/closing unit can freely move without colliding against the higher portion, moves the mold opening/closing unit into the mold clamping unit, and then moves downward and places the mold opening/closing unit on the higher portion of the stationary board.

FIG.1

## Die Casting Apparatus

### Background of the Invention

The present invention relates to a die casting apparatus in which a mold opening/closing unit mounted on a carrier is freely moved in/out from a mold clamping unit.

In a conventional die casting apparatus, a pair of metal molds are clamped by a mold clamping unit to perform casting. However, recently, in order to reduce a casting cycle, a continuous die casting apparatus has been developed in which a plurality of mold opening/closing units each comprising metal molds and a temporary mold clamping mechanism are sequentially moved in/out from a mold clamping/casting main unit, thereby performing casting after mold clamping. Examples of an apparatus of this type are an apparatus in which mold opening/closing units are moved in/out from a mold clamping unit alternately from both right and left sides thereof as disclosed in Japanese Utility Model Laid-Open (Kokai) No. 58-9725, and a rotary die casting machine in which mold opening/closing units are moved in a plurality of holding portions formed on a rotary table and the rotary table is rotated so that the mold opening/closing units are sequentially positioned at a mold clamping station to perform mold clamping and casting as disclosed in Japanese Patent Laid-Open (Kokai) No. 61-195766 filed by the present applicant.

The former apparatus in which the mold opening/closing units are moved in the mold clamping unit alternately from both the right and left sides thereof includes a long carrier extending from a mold clamping position to one mold opening/closing position and two mold opening/closing units mounted on the long carrier. The carrier is reciprocated in a right-and-left direction so that when one mold clamping unit is located at the mold clamping position, the other mold opening/closing unit is located at an external mold opening/closing position. As a result, while casting is performed to one mold opening/closing unit, the other mold opening/closing unit is prepared.

In the latter rotary die casting machine, the mold opening/closing units located on rollers of a metal mold setting unit are respectively moved onto rollers of the holding portions on the rotary table. Each mold opening/closing unit is floated from the corresponding roller by a cylinder provided at the holding portion to perform temporary mold clamping. Then, the rotary table is rotated to move each mold opening/closing unit to the mold clamping/casting position to perform final mold clamping and casting.

Of the above conventional die casting apparatuses, in the former apparatus in which the mold opening/closing units are moved in the mold clamping unit alternately from both the right and left sides thereof, two mold opening/closing units are mounted on a single carrier. Therefore, if one of the mold opening/closing units malfunctions and needs repair, the carrier cannot be moved until repair is completed. Therefore, the other mold opening/closing unit cannot be used, and production is temporarily stopped.

In the latter rotary die casting machine, each mold opening/closing unit is directly moved onto the roller of the corresponding holding portion without a carrier. Therefore, a cylinder for floating the mold opening/closing unit must be provided at each holding portion, resulting in a complicated structure.

### Summary of the Invention

It is, therefore, a principal object of the present invention to provide a die casting apparatus in which a mounting structure of a mold opening/closing unit is simple.

It is another object of the present invention to provide a die casting apparatus in which a mold opening/closing unit can be easily repaired.

It is still another object of the present invention to provide a die casting apparatus in which a plurality of mold opening/closing units are used, and an operation can be continuously performed even if one of the mold opening/closing units malfunctions, thereby improving productivity as compared with that of a conventional apparatus.

In order to achieve the above objects, there is provided a die casting apparatus in which mold opening/closing units are mounted on carriers and the carriers are freely moved in/out from a mold clamping unit in a lateral direction, wherein the mold clamping unit comprises at least two guides for guiding each of the carriers from a standby position to a predetermined position in the mold clamping unit and a stationary board having a higher portion formed at a portion sandwiched by the guides, each of the carriers comprises a lift unit for moving upward/downward the mold opening/closing unit, and when each of the carriers is to be moved, the lift unit positions the mold opening/closing unit at a height at which the mold opening/closing unit can freely move without colliding against the higher portion, moves the mold opening/closing unit into the mold clamping unit, and then moves downward and places the mold opening/closing unit on the higher portion of the stationary board.

## Brief Description of the Drawings

Fig. 1 is a schematic plan view of a rotary die casting machine showing an embodiment of a die casting apparatus according to the present invention;

Fig. 2 is a developed front view in which a right half is viewed from an arrow A in Fig. 1 and a left half is viewed from an arrow B in Fig. 1;

Fig. 3 is a partially cutaway front view of a mold opening/closing unit, a carrier, and part of a stationary board;

Fig. 4 is a plan view of the carrier and part of the stationary board;

Fig. 5 is a schematic front view showing another embodiment of the die casting apparatus according to the present invention;

Fig. 6 is a side view of Fig. 5;

Fig. 7 is a plan view of Fig. 5;

Fig. 8 is a front view of a mold opening/closing unit, a carrier, and part of a stationary board; and

Fig. 9 is a plan view of a main portion shown in Fig. 8.

## Detailed Description of the Preferred Embodiments

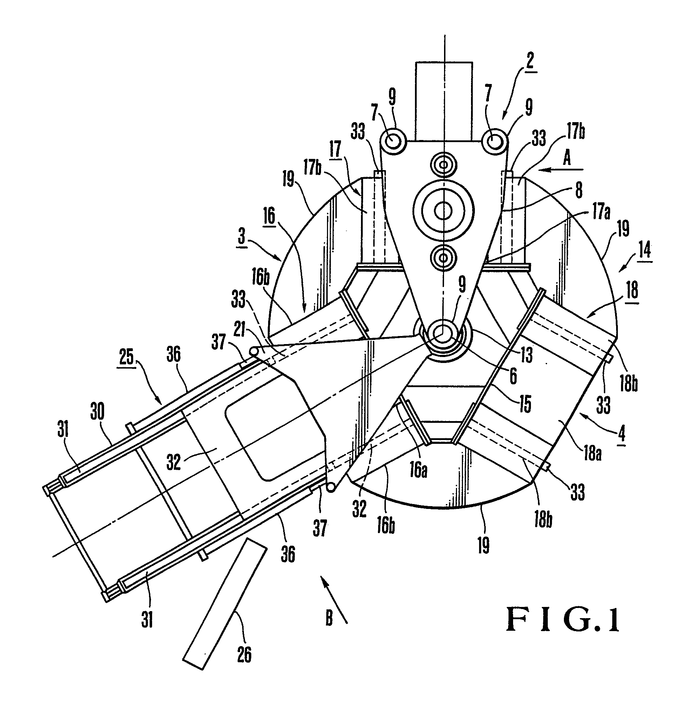

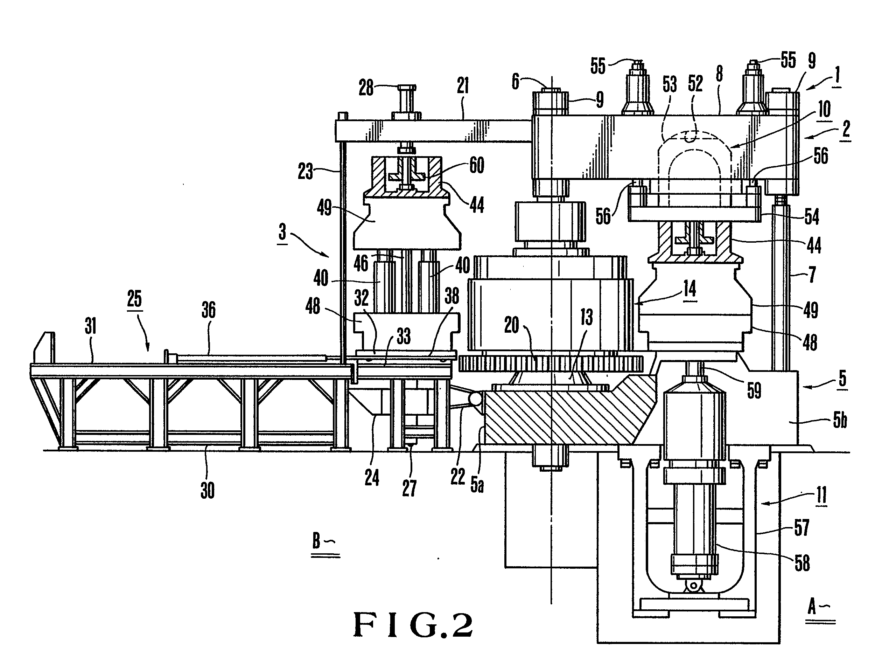

An embodiment in which a die casting apparatus according to the present invention is applied to a rotary die casting machine will be described below. Referring to Figs. 1 to 4, a rotary die casting machine 1 comprises first, second, and third stations 2, 3, and 4 central axes of which form angles of 120°, respectively. The first station 2 includes a base platen 5, obtained by integrally forming a table support portion 5a having a disk-like planar shape and an injection portion 5b having a planar shape of an isosceles triangle, and fixed to a foundation on a floor surface. Tie bars 6 and 7 are fixed by nuts at three portions, i.e., a central portion of the table support portion 5a and both end portions of the base of the isosceles triangle of the injection portion 5b and extend therefrom. Tie bar holes of a cylinder platen 8 which have isosceles triangle layout are fitted on upper end portions of the tie bars 6 and 7, and the tie bars 6 and 7 are tightly fixed by nuts 9. The first station 2 having the above arrangement has a mold clamping unit 10, an injection unit 11, and an automatic molten metal supply unit (not shown). These units will be described later in accordance with an order of steps.

An inverted funnel-like hollow shaft 13 for rotating a table which incorporates the tie bar 6 and extends upright concentrically therewith is fixed on the upper surface of the table support portion 5a of the base platen 5. A rotary table entirely represented by reference numeral 14 is rotatably supported by the hollow shaft 13 through upper and lower ball bearings. The rotary table 14 which is integrally formed by a box-like central frame 15 having an equilateral triangular planar shape and fitted on the ball bearings, three stationary boards 16, 17, and 18 arranged at positions respectively corresponding to three sides of the triangle, and sector-shaped support plates 19 arranged between adjacent stationary boards 16, 17, and 18. The stationary boards 16, 17, and 18 having a rectangular planar shape have higher central portions 16a, 17a, and 18a and lower portions 16b, 17b, and 18b formed at both sides of the higher central portions 16a, 17a, and 18a, respectively, and therefore have a projecting sectional shape. Rereference numeral 20 denotes a gear which meshes with a pinion (not shown) directly connected to a motor at the base platen 5 side. The gear 20 is fixed to the rotary table 14 and is arranged such that the rotary table 14 is intermittently rotated 1/3 time at a predetermined timing in accordance with rotation of the motor driven by a command from a controller.

The second station 3 includes an extrusion frame 21, having an isosceles triangular planar shape, and fixed to the cylinder platen 8 to horizontally extend, and a projecting frame 24, fixed to the table support portion 5a of the base platen 5 through a bracket 22, and connected to the extrusion frame 21 through a pair of tie bars 23 to horizontally extend.

The second station 3 having the above framework has a metal mold setting unit 25, a product extracting unit 26 to be described later, a projecting cylinder 27, and an extrusion cylinder 28. When a casting operation is started, metal molds are changed, or maintenance is to be performed, the metal mold cutting unit 25 supplies a mold opening/closing unit entirely represented by reference numeral 29 to the stationary boards 16, 17, and 18 of the rotary table 14 or extracts the mold opening/closing unit 29 therefrom. The second station 3 includes a frame 30 radially extending from the stationary boards 16, 17, and, 18 (to be represented by reference numeral 16 as long as they need not be independently described) and fixed on the floor surface. Two guide rails 31 are installed on the frame 30.

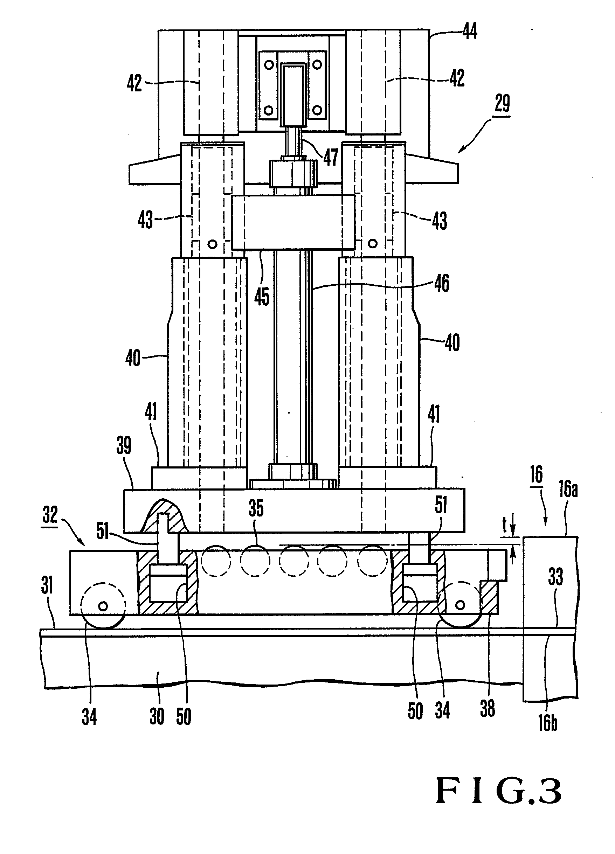

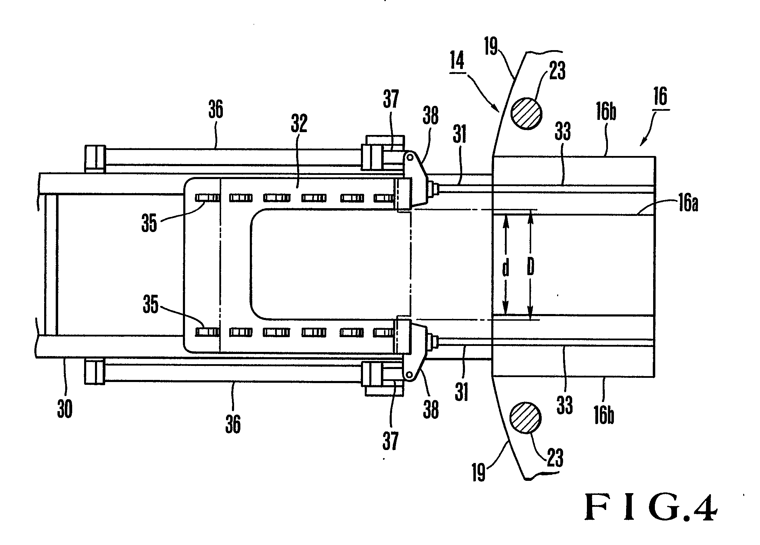

The mold opening/closing unit 29 and a unit for moving the mold opening/closing unit 29 in/out from the stationary board 16 will be described below. Reference numeral 32 denotes a carrier having four wheels 34 which are in rolling contact with the rails 31 and rails 33 installed on the stationary board 16. The carrier 32 includes an opening opposite to the stationary board 16 and therefore has a C or U planar shape. A width of the opening represented by reference symbol D in Fig. 4 is formed slightly larger than that represented by reference symbol d of the higher central portion 16a. Two rows of a plurality of rollers 35 are rotatably arranged on the carrier 32. Upper ends of the rollers 35, i.e., the upper surface of the carrier 32 is formed lower than the upper end of the stationary board higher central portion 16a by an amount represented by reference symbol t in Fig. 3. Reference numerals 36 denote a pair of carrier moving cylinders supported at both sides of the frame 31. Actuation ends of piston rods 37 of the cylinders 36 are fixed to connecting metal pieces 38 fixed at both sides of a front end portion of the carrier 32. When the piston rods 37 are moved forward/backward by, e.g., an air pressure, the carrier 32 moves forward/backward between a position at which the carrier 32 moves onto the lower portions 16b to surround the higher central portion 16a of the stationary board 16 from three directions and a position at which the carrier 32 moves onto the frame 31 as an external portion in a lateral direction of the stationary board 16.

The mold opening/closing unit 29 mounted on the carrier 32 has a mounting base 39 of a rectangular plate at its lower end portion. Square cylindrical brackets 40 vertically extend from four corners of the mounting base 39 by tightening bases 41 with bolts. A guide rod 42 is supported in an inner hole of each bracket 40 through a bush 43 and freely moves upward/downward. A top frame 44 having a rectangular planar shape is fixed to upper projecting portions of the guide rods 42 and moves upward/downward together with the guide rods 42. Two brackets 40 at a front portion are connected to two brackets 40 at a rear portion through connecting plates 45 so as to be reinforced, respectively. The proximal ends of a pair of right and left mold opening/closing cylinders 46 for moving the top frame 44 together with the guide rods 42 are fixed to the mounting base 39 so as to extend upright therefrom. Actuation ends of piston rods 47 of the cylinders 46 are connected to both side surfaces of the top frame 44. A stationary metal mold 48 and a movable metal mold 49 are fixed to the mounting base 39 and the top frame 44, respectively. When the top frame 44 is moved upward/downward, the movable metal mold 49 is opened/closed with respect to the stationary metal mold 48. In addition, when the top frame 44 is slightly moved downward after the metal molds are closed, a minimum necessary mold clamping force is applied.

The mold opening/closing unit 29 having the above arrangement is supported by pistons 143P in the carrier 32. That is, cylinders 50 are fixed to four portions, i.e., front, rear, right, and left portions of the carrier 32. Upper ends of piston rods 51 which move upward/downward together with the pistons 143P by, e.g., an air pressure are split, and projecting portions of the half upper ends are fitted in pin holes of the mounting base 39, thereby positioning the mold opening/closing unit 29. That is, step portions of the half upper ends support the mold opening/closing unit 29 to define its position in a vertical direction. When the piston rods 51 move upward/downward, the mounting base 39 moves upward/downward so that its lower surface moves between positions higher and lower than the upper surface of the stationary board higher central portion 16a. At the higher position of the lower surface, the mounting base 39 freely moves onto the stationary board 16 without contacting or colliding against the upper surface of the higher central portion 16a. At the lower position, it is seated on the lower portions 16b. When the piston rods 51 are further moved downward while the carrier 32 is located on the mold setting unit 25, the mounting base 39 of the mold opening/closing unit 29 is seated on the rollers 35. Thereafter, by moving the mounting base 39 along the rollers 35, the mold opening/closing unit 29 can be easily taken out from the carrier 32 for maintenance or the like.

As described above, after the metal molds 48 and 49 are temporarily clamped on the stationary board 16, the mold opening/closing unit 29 is moved to the first station 2 by pivoting motion of the rotary table 14, thereby performing mold clamping and casting. That is, the mold clamping unit 10 includes a ram 53 to be fitted in a ram hole 52 of the cylinder platen 8. Lower ends of the ram 53 are fixed on a moving platen 54, and piston rods 56 of a pair of pull-back cylinders 55 mounted on the upper surface of the cylinder platen 8 are also fixed on the moving platen 54. With this arrangement, when an oil is supplied to an upper portion of the ram 53, the top plate 44 of the temporarily clamped mold opening/closing unit 29 is pushed downward to perform final mold clamping. When an oil is discharged from the upper portion of the ram 53, mold clamping is released by an action of the pull-back cylinder 55.

The injection unit 11 for casting a molten metal into a cavity formed between the clamped metal molds 48 and 49 includes an injection cylinder 58 supported by a tie bar 57 extending downward from the base platen 5. A piston rod of the injection cylinder 58 is connected to a plunger fitted in an inner hole of an injection sleeve 59 to be freely moved forward/backward therein. After the injection sleeve 59 supplied with a molten metal is connected to the stationary metal mold 48, the plunger is moved forward by an oil pressure, and the molten metal is injected in the cavity of the metal molds 48 and 49.

A projecting rod connected to a piston rod of the projecting cylinder 27 provided at the second station 3 freely moves in/out from the stationary metal mold 48 through holes formed in the stationary board 16 and the mounting base 39. When the metal molds are opened, the projecting rod projects in the stationary metal mold 48 and pushes a solidified product out from the stationary metal mold 48 so that the product is easily held in the movable metal mold 49. An extrusion rod connected to a piston rod of the extrusion cylinder 28 through an ejector plate 60 freely moves in/out from the movable metal mold 49 and therefore can push the product out from the open movable metal mold 49. The product extracting unit 26 receives the extruded product and then horizontally pivots, thereby extracting the product from the die casting machine. In addition, the third station 4 has a spray unit (not shown) for applying a mold release agent in the open metal molds 48 and 49.

A casting operation of the rotary die casting machine having the above arrangement will be described below with reference to the mold opening/closing unit 29 in accordance with an order of steps. The mold opening/closing unit 29 in which the metal molds 48 and 49 are closed is mounted on the carrier 32 located on the rails 31 of the frame 30, and the piston rods 51 of the cylinders 50 are moved upward to move the mold opening/closing unit 29 upward so that the lower surface of the mounting base 39 is located higher than the higher central portion 16a of the stationary board 16. At this time, the rotary table 14 is stopped such that a central axis of the stationary board 16 coincides with that of the frame 30. Therefore, when the piston rods 37 of the carrier moving cylinders 36 are moved forward, the carrier 32 having the mold opening/closing unit 29 thereon is moved forward onto the stationary board 16 while the wheels 34 roll on the rails 31 and 33. At this time, the U-shaped carrier 32 moves onto the lower portions 16b while it surrounds the higher central portion 16a from three directions, and then abuts against a stopper and is stopped. Then, the piston rods 51 of the cylinders 50 are moved downward to fix the mold opening/closing unit 29 so that the mounting base 39 is seated on the higher central portion 16a. At this time, since the lower surface of the mounting base 39 is spaced apart from the rollers 35 of the carrier 32, the piston rods 37 are moved backward to move the carrier 32 from the stationary board 16 onto the frame 30, and the next mold opening/closing unit 29 is mounted thereon. The metal molds 48 and 49 of the mold opening/closing unit 29 fixed on the stationary board 16 are opened when the piston rod 47 of the mold opening/closing cylinder 46 moves upward, and reaches and stops at the third station when the rotary table 14 pivots through 120°. Thereafter, a mold release agent is applied in the metal molds 48 and 49 by the spray unit (not shown), and then the piston rod 47 of the mold opening/closing cylinder 46 moves downward to close the metal molds. In this case, a minimum necessary mold clamping force is applied to the metal molds 48 and 49.

After the metal molds are closed, the rotary table 14 pivots through 120°, and the closed mold opening/closing unit 29 reaches and stops at the first station 2. Then, a compressed oil is supplied to the upper portion of the ram 53 to move the moving platen 54 downward. Therefore, the top frame 44 is moved downward against the oil pressure of the mold opening/closing cylinder 46 to perform mold clamping with a large force. In this case, since the mounting base 39 of the mold opening/closing unit 29 is seated on the stationary board 16, the large mold clamping force is supported by the strong base platen 5 through the rotary table 14.

During mold clamping, a molten metal is supplied to the injection sleeve 59 of the tilted injection cylinder 58, and the injection cylinder having the molten metal therein stands upright to connect the injection sleeve 59 to a stationary sleeve at the metal mold 48 side. Thereafter, the molten metal is injected into the cavity of the metal molds 48 and 49 by the injection cylinder 58. While the molten metal is solidified and cooled, the compressed oil in the upper portion of the ram 53 is discharged, and the oil is supplied to the pull-back cylinders 55. Therefore, the moving platen is moved upward to release urging of the top frame 44. As a result, the large mold clamping force is released, and the minimum necessary mold clamping force set in the mole opening/closing cylinder 46 remains and acts on the metal molds 48 and 49.

During this cooling, the rotary table 14 rotates through 120°, and the mold opening/closing unit 29 in which a product is being cooled stops at the second station 3. After the metal molds 48 and 49 are completely cooled, the piston rod 47 of the mold opening/closing cylinder 46 is moved forward to move the top frame 44 upward, and at the same time the piston rod of the projecting cylinder 27 is moved forward. As a result, the solidified and cooled product is removed from the metal mold 48, and the projected product is held in and moved upward with the cavity of the movable metal mold 49 which moves upward together with the top frame 44. When the top frame 44 completely moves upward, the product extracting unit 26 operates to move its receiving tray forward to a central portion between the metal molds 48 and 49, and the piston rod of the extrusion cylinder 28 moves forward to project the projecting rod into the cavity through the ejector plate 60. Therefore, the product is discharged on the receiving tray, and the receiving tray is moved backward to extract the product from the machine and stack it.

The casting operation of one mold opening/closing unit 29 has been described above in accordance with the order of steps. In the above operation, each time other stationary boards 17 and 18 on the rotary table 14 stop at the second station 3, the mold opening/closing unit 29 is supplied to the stationary board in the manner as described above, and the same operation is performed at the stations 2, 3, and 4. Thereafter, the rotary table 14 is intermittently rotated through 120° to start a normal casting cycle.

In order to extract the pair of metal molds 48 and 49 during the normal casting operation for maintenance or the like, the mold opening/closing unit 29 having the metal molds 48 and 49 therein is moved backward onto the frame 30 by reciprocation of the carrier 32 and a vertical motion of the piston rods 51. Then, after the rotary table 14 rotates once, another mold opening/closing unit 29 is supplied while other two mold opening/closing units 29 continue the normal casting operation. Therefore, productivity of the machine except for replacement of the molds is not degraded. In order to replace all of the three mold opening/closing units because specifications of a product are changed, the mold opening/closing unit 29 is removed/mounted three times at the second station 3 each time the rotary table 14 rotates through 120°. In this case, if operations are continued at other stations 2 and 4, productivity is not so much degraded due to metal mold replacement.

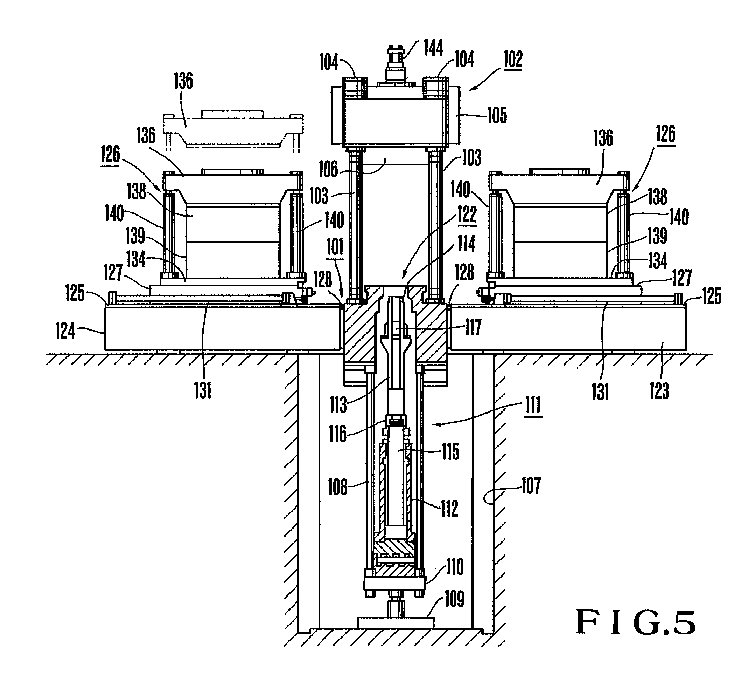

Note that in the above embodiment, three work stations are used. However, the number of work stations may be two or four. In addition, the present invention is applied not only to the rotary die casting machine but also to an apparatus in which two mold opening/closing units are moved in a mold clamping/casting unit alternately from right and left sides in a lateral direction thereof. That is, a mold clamping/casting unit similar to the first station 2 in the above embodiment is formed, and the stationary board 16 is formed on its base platen. The frame 30, the carrier 32, and the cylinders 36 are provided at each of the right and left sides of the stationary board 16. The mold opening/closing units mounted on the carriers are alternately moved forward onto the stationary board to perform mold clamping and casting. This embodiment will be described later in detail with reference to Figs. 5 to 9. Alternatively, a carrier long enough to mount two mold opening/closing units thereon may be formed and alternately moved in forward and reverse directions so that the right and left mold opening/closing units are alternately moved forward into and seated on the stationary board, thereby performing mold clamping and casting.

Figs. 5 to 9 show another embodiment of the die casting apparatus according to the present invention. In Figs. 5 to 9, a base platen 101 having a rectangular planar shape is installed on a foundation of a floor surface, and a mold clamping unit entirely represented by reference numeral 102 is located at a central portion in a longitudinal direction of the base platen 101. The mold clamping unit 102 includes a cylinder platen 105 fixed by tie bars 103 extending upright from four corners of the base platen 101 and nuts 104. A mold clamping cylinder (not shown) for moving a moving platen 106 downward from an upper position shown in the drawings to perform mold clamping to be described later is located at a central portion of the cylinder platen 105.

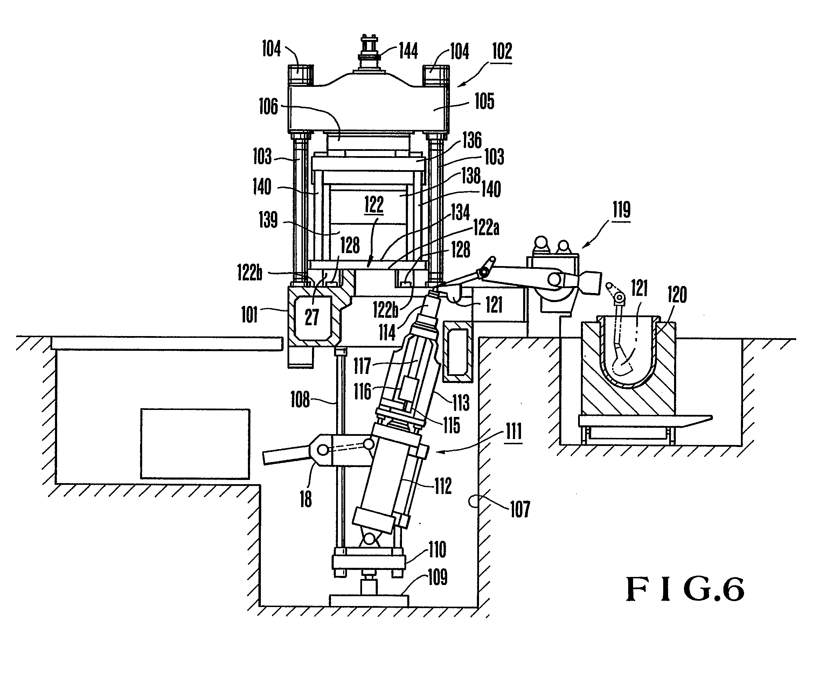

A cylinder receiver 110 is fixed to a plurality of support bars 108 extending from the base platen 101 into a pit formed below the floor surface and a support base 109 fixed on a bottom surface of the pit 107. An injection unit entirely represented by reference numeral 111 is supported by the raisable cylinder receiver 110. The injection unit 111 comprises an injection cylinder 112 and a sleeve frame 113 concentrically fixed on an upper end face of the injection cylinder 112. A plunger tip of a plunger 117 connected to a piston rod 115 which is moved forward/backward by an oil pressure of the injection cylinder 112 through a coupling 116 is fitted in an inner hole of the injection sleeve 114 supported at the upper end portion of the sleeve frame 113 to be freely moved forward/backward. The entire injection unit 111 pivots by motion of the tilt cylinder 118 between an upright state and a tilt state shown in the drawings. In the tilt state, a molten metal is supplied, and in the upright state, the molten metal is injected. Reference numeral 119 clearly shown in Fig. 6 denotes an automatic molten metal supply unit for supplying a molten metal. The automatic molten metal supply unit 119 is arranged such that a raddle 121 is reciprocated between a melting furnace 120 in which a molten metal is received and the injection sleeve 114 at the tilt position to supply the molten metal at a predetermined timing.

A stationary board 122 onto which a mold opening/closing unit 126 to be described later is integrally formed at a central portion of the base platen 101 at a position immediately below a mold clamping cylinder. The stationary board 122 has a higher central portion 122a and lower portions 122b formed at both sides of the higher central portion 122a as clearly shown in Figs. 6 to 9 and therefore has a projecting sectional shape. The base platen 101 includes bases 123 and 124 extending from the stationary board 122 in right and left directions, respectively. Two rails 125 are installed on each of the bases 123 and 124.

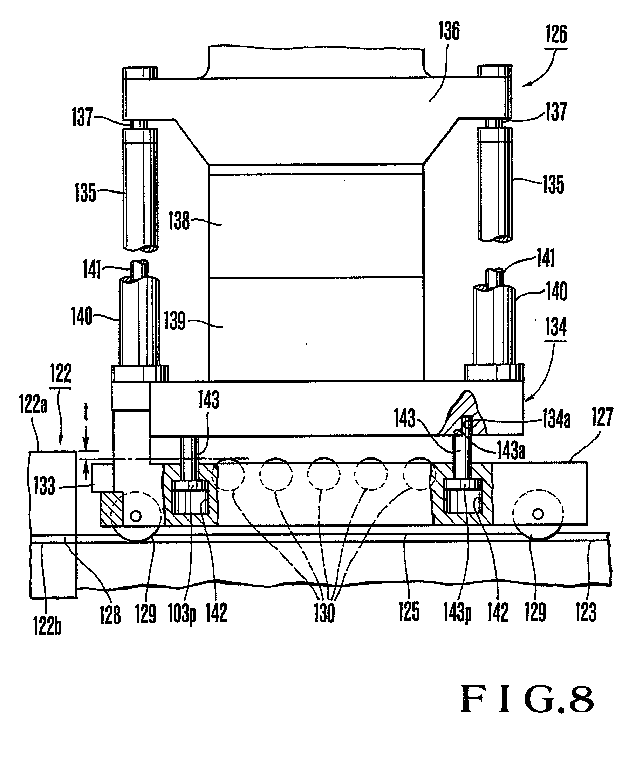

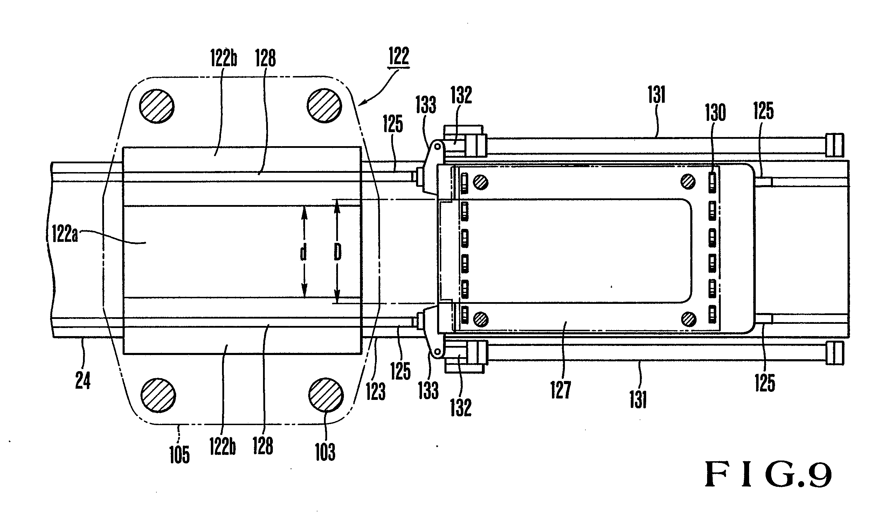

The mold opening/closing unit 126 and a unit for moving the mold opening/closing unit 126 in/out from the stationary board 122 will be described below. Reference numeral 127 denotes a carrier having four wheels 129 which roll on the rails 125 and rails 128 installed on the stationary board 122. The carriers 127 are provided on the right and left bases 123 and 124, respectively. Since the right and left carriers 127 and the mold opening/closing units 126 mounted thereon have the same arrangements, respectively, only a pair at one side will be described below. The carrier 127 includes an opening opposite to the stationary board 122 and therefore has a U planar shape. A width of the opening represented by reference symbol D in Fig. 9 is formed slightly larger than that represented by reference symbol d of the higher central portion 122a. Two rows of a plurality of rollers 130 are rotatably arranged on the carrier 127. Upper ends of the rollers 130, i.e., an upper surface of the carrier 127, are formed lower than an upper surface of the stationary board higher central portion 122a by an amount represented by reference symbol t in Fig. 8. Reference numeral 131 denotes a pair of carrier moving cylinders supported at both sides of the base 123. Actuation ends of piston rods 132 of the cylinders 131 are connected to connecting metal pieces 133 fixed at both sides of a front end portion of the carrier 127. When the piston rods 132 are moved forward/backward by, e.g., an air pressure, the carrier 127 is moved forward/backward between a position at which the carrier 127 moves onto the lower portions 122b while it surrounds the higher central portion 122a of the stationary board 122 from three directions and a position at which the carrier 127 moves onto the base 123 as an external portion in a lateral direction of the stationary board 122.

The mold opening/closing unit 126 mounted on the carrier 127 has at its lower end portion a mounting base 134 having a rectangular planar shape. A pair of mold opening/closing cylinders 135 extend from central portions of both short sides of the mounting base 134 such that their proximal ends are fixed to the mounting base 134. Reference numeral 136 denotes a top frame, both ends of which are fixed to actuation ends of piston rods 137 of the mold opening/closing cylinders 135. A movable metal mold 138 and a stationary metal mold 139 are fixed to the top frame 136 and the mounting base 134, respectively. When the top frame 136 is moved upward/downward by the mold opening/closing cylinder 135, the movable metal mold 138 is opened/closed with respect to the stationary metal mold 139. When the top frame 136 is further slightly moved downward after the matal molds are closed, a minimum necessary mold clamping force is applied. Reference numeral 140 denotes cylindrical guide pipes extending from the mounting base 134 such that their proximal ends are fixed to four corners of the mounting base 134. Upper ends of guide rods 141 fitted in inner holes of the guide pipes to be freely moved upward/downward are fixed to the top frame 136, thereby guiding upward/downward motion of the top frame 136.

The mold opening/closing unit 126 having the above arrangement is supported by pistons at the carrier 127 side. That is, cylinders 142 are provided at four positions, i.e., front, rear, right, and left positions of the carrier 127. Upper end half portions 143a of piston rods 143 which are moved upward/downward by an air pressure or the like of the cylinders 142 are fixed to the mold opening/closing unit, so that upward/downward motion of the top frame 136 is guided by the guide pipes 140. The upper end half portions 143a of piston rods 143 which are moved upward/downward by an air pressure or the like of the cylinders 142 are fitted in pin holes 134a formed in the mounting base 134, thereby positioning the mold opening/closing unit 126. Step portions (upper end half portions) 143a define downward and horizontal motion of the mold opening/closing unit 126, thereby supporting the unit 126. When the piston rods 143 move upward/downward, the mounting base 134 is moved upward/downward so that its lower surface is moved between higher and lower positions than an upper surface of the stationary board higher central portion 122a. At the higher position of the lower surface, the mounting base 134 moves onto the stationary board 122 without contacting the upper surface of the higher central portion 122a, and at the lower position, it is seated on the lower portions 122b. When the piston rods 143 are further moved downward while the carrier 127 is located on the base 123, the mold opening/closing unit 126 is seated on the rollers 130 and therefore can be easily taken out from the carrier 126 for maintenance or the like.

An extrusion cylinder 144 is fixed on an upper end portion of the mold clamping unit 102 and extrudes a product from the open movable metal mold 138 in the mold clamping unit 102. Reference numerals 145 denote metal mold spray units provided for the right and left bases 123 and 124. Each metal mold spray unit 145 includes a spray pot 146 capable of moving toward a central portion of the mold opening/closing unit 126 extracted onto the base 123 or 124 and applies a mold release agent in a cavity of the matal molds 138 and 139 opened in the mold opening/closing unit 126. Reference numerals 147 denote product extracting units provided for the right and left bases 123 and 124. Each product extracting unit 147 includes a cylinder 149 capable of pivoting between a product extracting position and a product stacking position 148. A chuck 150 at the cylinder 149 side is moved into the open matal molds 138 and 139 at the product extracting side to extract a product. Reference numeral 151 denotes a spray unit, provided to the injection unit 111, for applying a mold release agent to the injection sleeve 114.

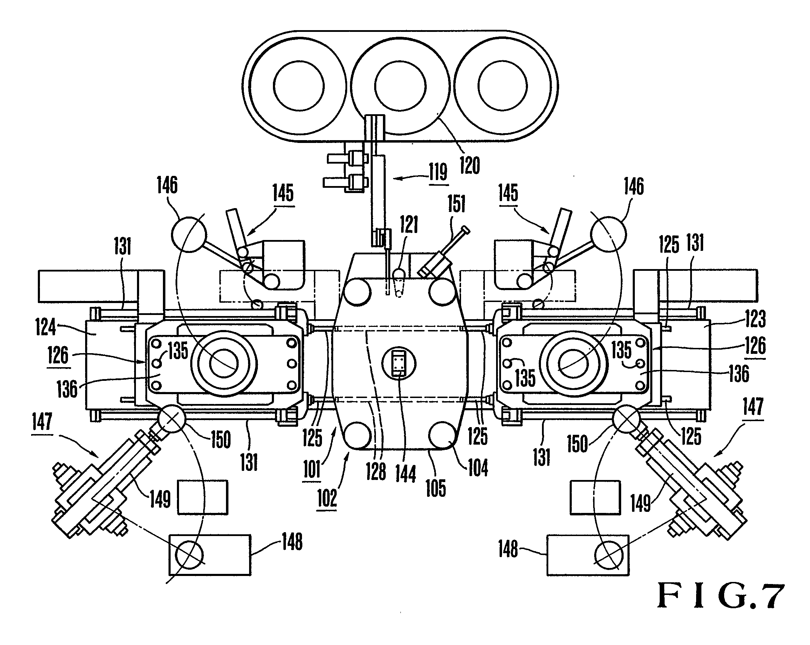

An operation of the die casting apparatus having the above arrangement will be described below. Before casting is started, the carriers 127 are stopped on the rails 125 of the bases 123 and 124 while they are supported by the piston rods 132 of the carrier moving cylinders 131. The mold opening/closing unit 126 is supported on each carrier 127 such that it floats from the rollers 130 by the piston rods 143 which are moved upward. The dies 138 and 139 are mounted in each mold opening/closing unit 126. When the mold opening/closing cylinders 135 of one of the mold opening/closing units 126 are operated so that their piston rods 137 are moved forward or upward, the top frame 136 is moved upward while it is guided by the guide pipes 140, thereby opening the matal molds. Thereafter, a mold release agent is applied to the cavity of the matal molds 138 and 139 by the metal mold spray unit 145 shown in Fig. 7, and the piston rods 137 are moved backward or downward to close the matal molds. Then, the piston rods 137 are further slightly moved backward or downward to apply a minimum necessary mold clamping force.

Then, the piston rods 132 of the carrier moving cylinders 131 are moved forward, the carrier 127 moves forward while the wheels 129 roll on the rails 125 and 128 and stops at the central portion of the stationary board 122. Since the opening width D of the carrier 127 is wider than the width d of the stationary board higher central portion 122a as shown in Fig. 9, the carrier 127 easily moves forward while it surrounds the higher central portion 122a. While the carrier 127 moves forward, the head end sides of the cylinders 142 are connected to a pump, and their rod end sides are connected to a tank. However, after the forward movement of the carrier is completed, the head end sides are also connected to the tank by switching solenoid valves. Therefore, the entire mold opening/closing unit 126 is moved downward, and its mounting base 134 is seated on the higher central portion 122a. Then, when the mold clamping cylinder is operated to move the moving platen 106 downward, the top frame 136 moves downward against a pressure of the mold opening/closing cylinders, and the matal molds 138 and 139 are finally clamped. In this case, the mold clamping force acts on the stationary board 122, i.e., the strong base platen 101 but does not act on the carrier 127 because a gap t is formed therebetween. While the mold clamping is performed, the entire injection unit 111 is tilted by the tilt cylinder 118, the molten metal is supplied into the injection sleeve 114 by the automatic molten metal supply unit, and the injection cylinder is raised. Then, the injection sleeve 114 is engaged with a sleeve hole of the stationary metal mold 139, and the plunger 117 is moved forward to inject the molten metal in the cavity of the matal molds 138 and 139.

After the injected molten metal is solidified and cooled, mold clamping of the mold clamping cylinder is released, and the head end sides of the cylinder 142 are switched to the pump. Therefore, the mold opening/closing unit 126 is moved upward, and the mounting base 134 is moved apart from the higher central portion 122a of the stationary board 122. Therefore, when the piston rods 132 of the carrier moving cylinders 131 are moved backward, the carrier 127 having the mold opening/closing unit 126 thereon is moved backward onto the base 123. During mold clamping and injection, a mold release agent is applied in the matal molds 138 and 139 of the mold opening/closing unit 126 mounted on the carrier 127 located on the other base 124 in the same manner as described above, and the carrier 127 on the base 124 is moved forward to the mold clamping position at the same time the carrier 127 at the base 123 side is moved backward onto the base 123. The matal molds 138 and 139 closed in the mold opening/closing unit 126 on the carrier 127 on the base 123 are opened by the mold opening/closing cylinders 140. A product held in the movable metal mold 138 is extruded to a chuck of the product extracting unit 147 which is pushed to a central portion of the matal molds 138 and 139, taken out from the metal mold by the cylinder 149, and then stacked on the stacking portion 148.

While the product is extracted, the matal molds 138 and 139 of the other mold opening/closing unit 126 at the mold clamping position are clamped and the molten metal is injected. During mold clamping and injection, a mold release agent is applied in other matal molds 138 and 139, and the above operation is repeated to alternately perform casting to the right and left mold opening/closing units 126. In order to exchange the matal molds 138 and 139 or to perform maintenance thereof, the rod end sides of the cylinders 142 are switched to the pump, and their head end sides are switched to the tank. Therefore, the piston rods 143 are moved backward, and the mold opening/closing unit 126 is moved downward until the mounting base 134 is seated on the rollers 130. After the mounting base 134 is seated on the wheels 130, the mold opening/closing unit 126 can be easily moved on the rollers 130 and taken out from the carrier 127 either manually or using an extracting tool (not shown).

Note that the right and left carriers 127 may be moved in/out from the mold clamping portion either at different timings or in synchronism with each other such that while one carrier is moved in the mold clamping unit, the other one is taken out therefrom. In addition, even when an operation is temporarily stopped because the matal molds of one mold opening/closing unit 126 are to be replaced or the mold opening/closing unit 126 malfunctions and needs repair, casting can be continued using the other mold opening/closing unit.

As has been described above, in the die casting apparatus according to the present invention, the carriers having the mold opening/closing units thereon are located at right and left sides of the vertical mold clamping unit, respectively, and independently moved in/out from the vertical mold clamping unit. Therefore, when casting of one of the mold clamping/closing units is temporarily stopped for mold replacement or maintenance, casting of the other mold opening/closing unit can be continued, thereby improving productivity.

## Claims

1. A die casting apparatus in which mold opening/closing units are mounted on carriers and said carriers are freely moved in/out from a mold clamping unit in a lateral direction, wherein said mold clamping unit comprises at least two guides for guiding each of said carriers from a standby position to a predetermined position in said mold clamping unit and a stationary board having a higher portion formed at a portion sandwiched by said guides; each of said carriers comprises a lift unit for moving upward/downward said mold opening/closing unit; and when each of said carriers is to be moved, said lift unit positions said mold opening/closing unit at a height at which said mold opening/closing unit can freely move without colliding against said higher portion, moves said mold opening/closing unit into said mold clamping unit, and then moves downward and places said mold opening/closing unit on said higher portion of said stationary board.

2. An apparatus according to claim 1, wherein said lift unit comprises at least a pair of a piston and a cylinder.

3. An apparatus according to claim 2, wherein said lift unit comprises four pairs of pistons and cylinders located at front, rear, right, and left positions of each of said carriers.

4. An apparatus according to claim 2, wherein said cylinder is fixed to each of said carriers.

5. An apparatus according to claim 4, wherein an upper end of a piston rod which moves upward/downward together with said piston is split to form a projecting portion and a step portion, said projecting portion being fitted in a hole of a mounting base of said mold opening/closing unit, and said step portion defining a vertical position of said mold opening/closing unit.

6. An apparatus according to claim 1, wherein each of said carriers has a C or U planar shape, and an opening portion is formed to oppose said mold clamping unit and to surround said higher portion from three directions.

7. An apparatus according to claim 1, wherein said mold clamping unit is a vertical mold clamping unit.

8. An apparatus according to claim 7, wherein said carriers having said mold opening/closing units are independently located at both sides of said vertical mold clamping unit and can be moved in/out from said vertical mold clamping unit independently of each other.

9. An apparatus according to claim 7, wherein said vertical mold clamping unit is located on a rotary table.

10. An apparatus according to claim 1, wherein each of said carriers comprises a plurality of rollers for holding and moving said mold opening/closing unit in a direction lateral to said carrier when said carrier is located outside said mold clamping unit and said lift unit moves said mold opening/closing unit downward.

F I G.1

FIG.2

# FIG.3

FIG.4

EP 0 315 801 A2

FIG.5

EP 0 315 801 A2

FIG.6

EP 0 315 801 A2

EP 0 315 801 A2

# FIG.7

FIG.8

FIG.9

EP 0 315 801 A2